Europäisches Patentamt

(19) European Patent Office

Office européen des brevets

(11) Veröffentlichungsnummer : **0 228 390 B1**

(12) # EUROPÄISCHE PATENTSCHRIFT

(45) Veröffentlichungstag der Patentschrift :
**18.09.91 Patentblatt 91/38**

(51) Int. Cl.$^5$ : **G02B 7/02**

(21) Anmeldenummer : **86903251.6**

(22) Anmeldetag : **14.06.86**

(86) Internationale Anmeldenummer :
**PCT/DE86/00252**

(87) Internationale Veröffentlichungsnummer :
**WO 86/07470 18.12.86 Gazette 86/27**

---

(54) **FASSUNG FÜR OPTISCHE ELEMENTE.**

---

(30) Priorität : **15.06.85 DE 3521640**

(43) Veröffentlichungstag der Anmeldung :
**15.07.87 Patentblatt 87/29**

(45) Bekanntmachung des Hinweises auf die
Patenterteilung :
**18.09.91 Patentblatt 91/38**

(84) Benannte Vertragsstaaten :
**AT BE CH DE FR GB IT LI LU NL SE**

(56) Entgegenhaltungen :
**DE-A- 2 061 661**
**FR-A- 2 311 952**
**Patent Abstracts of Japan, vol. 8, No. 33,**
**(P-254)(1470) 14 February 1984 & JP-A-58-187**
**907**
**Patent Abstracts of Japan, vol. 8, No. 121,**
**(P-278)(1558) 7 June 1984 & JP-A-59-28 107**

(73) Patentinhaber : **Optische Werke G.**
**Rodenstock**
**Isartalstrasse 43**
**W-8000 München 5 (DE)**

(72) Erfinder : **HANKE, Peter**
**Hoflacherstr. 64**
**W-8031 Eichenau (DE)**
Erfinder : **GRIMMINGER, Rolf, Dietrich**
**Am Fohlengarten 5a**
**W-8042 Oberschleissheim (DE)**

(74) Vertreter : **Steinmann, Otto C. et al**
**Kanzlei Münich, Steinmann, Schiller**
**Willibaldstrasse 36**
**W-8000 München 21 (DE)**

## Beschreibung

Die Erfindung bezieht sich auf ein optisches System mit einer Fassung für optische Elemente, wie Linsen etc. gemäß dem Oberbegriff des Patentanspruchs 1.

Derartige Fassungen werden beispielsweise für Objektive, aber auch für optische Geräte aller Art, wie Untersuchungsgeräte, Feldstecher etc. benötigt.

Bei optischen Systemem besteht allgemein das Problem, daß die Rotationssymmetrie montierter optischer Systeme zum überwiegenden Teil durch das Paßspiel zwischen Linse und Fassung beeinträchtigt wird. Durch Einengung der ISO-Passungstoleranzen ist es bei gleichzeitigem Anstieg der Fertigungskosten zwar möglich, die Rotationssymmetrie des fertig montierten Systems zu verbessern. Diesem Weg sind aber physikalische Grenzen gesetzt.

Für optische Systeme mit Linsen aus Kunststoffmaterialien ist es beispielsweise aus der japanischen Offenlegungsschrift 59-28107 bekannt, von der formal bei der Bildung des Oberbegriffs des Patentanspruchs 1 ausgegangen wird, diese mit einem Ansatz aus einem Schaummaterial zu versehen, der die Ausdehnungsunterschiede aufnimmt, der sich durch den größeren Ausdeh-nungskoeffizienten des Kunststoffmals im Vergleich zu typischen Fassungsmaterialien ergibt.

In der Regel haben jedoch die Linsenwerkstoffe gegenüber den Fassungswerkstoffen deutlich kleinere thermische Ausdehnungskoeffizienten. Das Paßspiel bei Raumtemperatur muß so gewählt werden, daß bei Temperaturvariation eine ausreichende Kontraktionsreserve vorhanden ist. Ist dieses Paßspiel in nicht ausreichendem Maß vorhanden, treten hohe Radialspannungen in den Linsen auf, die unter Umständen zu einer dramatischen Verschlechterung der optischen Leistung führen. Besonders zu beachten ist hierbei die Tatsache, daß bei dem in 99% aller Fälle angewandtem Fassungswerkstoff Aluminium die Differenz zwischen dessen Ausdehnungskoeffizienten und repräsentativen Ausdehnungskoeffizienten optischer Gläser bis zu 16 * $10^{-6}$/Grad sein kann.

Weiterhin ist in der US-PS 2 221 736 vorgeschlagen worden, auf den V-förmig gestalteten Rand eines Brillenglases eine gummiartige Beschichtung aufzubringen. Diese Beschichtung des V-förmigen Randes eines Brillenglases soll nicht nur Formunterschiede zwischen Brillenfassung und Brillenglas ausgleichen, sondern auch "thermische Größenänderungen absorbieren".

Bei den in dieser Druckschrift angesprochenen Formunterschieden handelt es sich um die typischen Formunterschiede, wie sie beim Einschleifen von "rohrunden" Gläsern in Brillenfassungen auftreten, also nicht um Passungstoleranzen hochgenauer optischer Systeme. Die Verwendung der in der US-PS 2 221 736 vorgesehenen Beschichtung für hochgenaue optische Systeme ist dieser Druckschrift nicht entnehmbar und offensichtlich auch nicht vorgesehen, da sich bei Brillenfassungen nicht die Zentrierprobleme hochgenauer optischer Systeme stellen.

Eine Fassung anderer Gattung ist aus der DE-PS 1 113 101 bekannt. Bei dieser Fassung wird ein Gummiring verwendet, der in eine Nut des Fassungskörpers eingelegt ist und an einer Fläche einer Linse derart anliegt, daß die Linse elastisch gegen eine Anlage gedrückt wird.

Die in dieser Druckschrift angegebene Ausbildung erlaubt zwar eine Abdichtung des Fassungskörpers, ist aber nicht in der Lage, typische Zentrierfehler, wie sie durch Passungstoleranzen auftreten, wesentlich herabzusetzen.

Weitere Linsenfassungen, bei denen elastische Elemente verwendet werden, sind aus der DDR-PS 207 047 und den DE-PSen 1 122 738, 1 127 110, 1547 276, 2 061 661 und 26 19 288 bekannt. Diese Fassungen anderer Gattung als im Oberbegriff des Patentanspruchs 1 vorausgesetzt, haben jedoch alle den Nachteil, daß sie aufwendig in der Herstellung sind und darüberhinaus kaum zu einer Verringerung der Zentrierfehler optischer Systeme führen: Beispielsweise wird gemäß der DE-PS 1 122 736 eine geteilte Fassung verwendet, in die die Linsen eingestzt werden. Eine derartige Fassung ist nicht nur aufwendig zu fertigen, sondern hat auch verhältnismäßig große inhärente Fehler, die beispielsweise durch den "Teilvorgang" entstehen, und die durch das in den die Linsen aufnehmenden Nuten vorgesehene elastische Material nicht ausgeglichen werden können.

Der Erfindung liegt die Aufgabe zugrunde, eine einfach aufgebaute Fassung für optische Elemente, wie Linsen oder dgl. anzugeben, bei der die Zentrierung der optischen Elemente auch bei thermischen und dynamischen Belastungen stets gewährleistet ist.

Diese Aufgabe wird erfindungsgemäß dadurch gelöst, daß von einer Fassung ausgegangen wird, die gemäß dem Oberbegriff des Patentanspruchs 1 ausgebildet ist, und diese Fassung durch die im kennzeichnenden Teil des Patentanspruchs 1 angegebenen Merkmale weitergebildet wird. Weiterbildungen der Erfindung sind in den Unteransprüchen angegeben.

Der Erfindung liegt der Gedanke zugrunde, einerseits eine zwischen dem optischen Element, beispielsweise einer Linse, und der Fassung ausreichend dimensionierte radialsymmetrische Dehnungsfuge vorzusehen, andererseits durch geeignete Mittel sicherzustellen, daß die Zentrierung der Linse auch bei thermischen und dynamischen Belastungen stets gewährleistet ist. Überraschenderweise kann dies dadurch erreicht werden, daß auf dem zylindrischen Umfangsrand der Linse bzw. des optischen Elements mindestens drei voneinander beabstandete Rippen aus hochelastischem Material aufgebracht sind. Vollumlaufende Rippen kommen nämlich wegen des fehlenden Luftausgleichs beim Einbau der Linsen in die Fassung nicht in Betracht.

Die Dimensionierung der nominellen Spaltweite zwischen Fassung und Linse wird dabei so vorgenommen, daß sowohl die ISO-Passungstoleranzen der Durchmesser als auch deren thermische Dehnungsbeträge von den hochelastischen Rippen bei gerade noch akzeptablen Druckschwankungen aufgenommen werden können.

Die Länge und die Zahl der Rippen ist abhängig zu machen von der Weichheit des hochelastischen Rippenmaterials sowie der gewünschten Lagestabilität der eingebauten Linse. Besonders vorteilhaft ist die in Anspruch 2 angegebene Lösung, bei der lediglich drei Rippen vorgesehen sind, deren Winkelerstreckung jeweils ca. 60° beträgt und deren Mitten voneinander einen Winkelabstand von jeweils ca. 120° haben.

Dabei ist die erfindungsgemäß vorgenommenen Standardbemessung der Höhe der Rippen derart, daß diese beim Einbau um 50% komprimiert werden. Eine Kompression der Rippen bei Normbedingungen um 50% erlaubt dabei eine Kompensation sämtlicher sich aufgrund von Passungstoleranzen und Temperaturänderungen ergebenden Spaltweiten.

Im Anspruch 3 sind tabellarisch typische Rippenhöhen h und Spaltweiten s für bestimmte Nennmaße angegeben. Ausdrücklich wird darauf hingewiesen, daß es sich hierbei um eine exemplarische Angabe handelt, von der je nach Einsatzbedingungen, verwendeten Rippenmaterial etc. jederzeit abgewichen werden kann.

Als Material für die hochelastischen Rippen kommen im Prinzip die verschiedensten elastischen Materialien in Betracht, die eine hohe Klebefestigkeit gegenüber Gläsern und Lacken sowie eine hohe Flexibilität haben und keine Langzeit-Plastizität (Kriechvermögen) aufweisen. Ferner sollten die für die Rippen verwendeten Materialien ausreichend niederviskos sein, sowie eine ausreichend hohe Oberflächenenergie (Oberflächenspannung) haben. Weitere günstige Eigenschaften, die insbesondere den Zusammenbau der Fassung erleichtern, sind ein einkomponentiger Aufbau des elastischen Materials, ein ausreichendes Gleitvermögen der vernetzten Oberfläche, eine gute Abriebfestigkeit sowie eine Ultraschall-Waschfestigkeit. Letztlich sollte das Material resistent gegen Umwelteinflüsse wie Temperatur, Feuchte, UV-Strahlung und Mikroben sein.

Ein geeigneter Werkstoff, der die vorstehend genannten Anforderungen erfüllt, ist beispielsweise ein einkomponentiger Silikonkautschuk, der unter der Bezeichnung SIL 09 im Handel erhältlich ist.

Die Lagestabilität und damit die Zentrierung des optischen Systems kann weiter dadurch verbessert werden, daß nach Anspruch 4 bzw. 5 ein ebenfalls mit elastischen Rippen, bevorzugt drei elastischen Rippen versehener Vorschraubring bzw. ein einzuklebender Steckring verwendet wird. Die Rippen dieser Halteringe werden beim Einsetzen soweit komprimiert, daß bei möglichen auftretenden dynamischen Belastungen ein Abheben der Linse von der Ringkante vermieden wird.

Die Erfindung wird nachstehend exemplarisch unter Bezugnahme auf die Zeichnung näher beschrieben, in der zeigen:

Fig. 1 eine Aufsicht und einen Querschnitt bei I-I einer mit erfindungsgemäßen elastischen Rippen versehenen Linse,

Fig. 2 und 3 Linsen nach Fig. 1 eingebaut in eine Fassung, wobei zusätzlich ein ebenfalls mit elastischen Rippen versehener Vorschraubring bzw. ein eingeklebter Steckring verwendet wird.

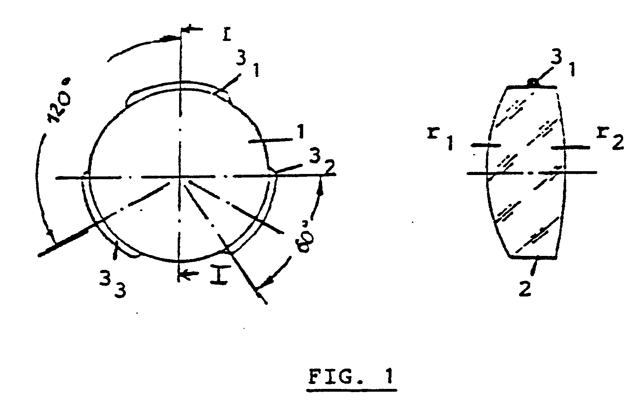

Fig. 1 zeigt eine Linse 1 mit optischen Flächen r1 und r2 und einer zylindrischen Umfangsfläche 2, auf der elastische Rippen $3_1$, $3_2$ und $3_3$ aufgebracht sind. Die elastischen Rippen 3 haben eine Winkelerstreckung von 60° und einen Winkelabstand von 120°.

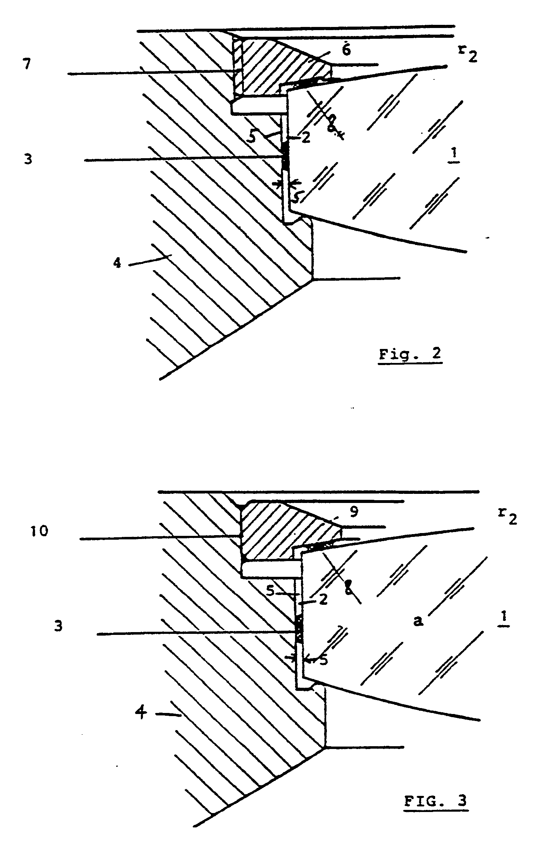

Die Fig. 2 und 3 zeigen den Einbau einer mit derartigen elastischen Rippen 3 versehenen Linse 1 in eine Fassung 4. Die nominelle Spaltweite s zwischen der Zylinderfläche 2 der Linse 1 und der zugeordneten Fläche 5 der Fassung 4 ist dabei so gewählt, daß sowohl die ISO-Passungstoleranzen der Durchmesser als auch deren thermische Dehnungsbeträge von den hochelastischen Rippen 3 bei gerade noch aktezptablen Druckschwankungen aufgenommen werden können. Dabei hat es sich als besonders vorteilhaft herausgestellt, wenn die Höhe der Rippen 3 beim Einbau in die Fassung 4 auf 50% komprimiert wird. Typische nominelle Spaltweiten und Rippenhöhen für verschiedene Linsen- und Fassungsdurchmesser im ISO-Passungssystem H6/h7 sind in der folgenden Tabelle zusammengestellt:

| Nennmaß N mm | Linsen- durchmesser mm | Fassungs- durchmesser mm | nom. Spalt- weite mm | Rippen- höhe mm |
|---|---|---|---|---|
| ... 18 | $(N-0,08)_{h7}$ | $N^{H6}$ | 0,040 | 0,08 |
| 18... 30 | $(N-0,12)_{h7}$ | $N^{H6}$ | 0,060 | 0,12 |
| 30... 50 | $(N-0,20)_{h7}$ | $N^{H6}$ | 0,100 | 0,20 |
| 50... 80 | $(N-0,30)_{h7}$ | $N^{H6}$ | 0,150 | 0,30 |
| 80...120 | $(N-0,45)_{h7}$ | $N^{H6}$ | 0,225 | 0,45 |

Aufgrund der Unterschiede der Ausdehnungskoeffizienten des Fassungswerkstoffs, beispielsweise Aluminium und des Linsen-Werkstoffes ist es offensichtlich, daß die durch die erfindungsgemäß vorgesehenen Rippen erreichte Lagestabilität mit steigender Temperatur ab- und mit fallender Temperatur zunimmt. Typische Zentrierfehler, die sich in der Praxis beispielsweise aufgrund von unterschiedlichen Höhen der Rippen ergeben, liegen in der Größenordnung einiger μm.

Durch die in den Fig. 2 und 3 ebenfalls dargestellten Halteringe lassen sich die Zentrierfehler noch wesentlich verringern.

Fig. 2 zeigt einen Vorschraubring 6, der über ein Gewinde 7 mit der Fassung 4 verbunden ist. Der Vorschraubring 6 weist an einer der Linsenfläche $r_2$ zugewandten Seite drei elastische Rippen 8 auf, von denen in Fig. 2 nur eine dargestellt ist. Die elastischen Rippen 8 haben ebenfalls eine Winkelerstreckung von jeweils ca. 60° und einen Winkelabstand von jeweils ca. 120°.

Fig. 3 zeigt einen eingeklebten Steckring 9, der über eine Klebeverbindung 10 mit der Fassung 4 verbunden ist. Ansonsten ist der Klebering 9 gleich ausgebildet wie der in Fig. 2 dargestellte Vorschraubring 6 und weist insbesondere drei hochelastische Rippen 8 mit einem Winkelabstand von jeweils 120° und einer Winkelerstreckung von jeweils 60° auf.

Beim Einsetzen der Halteringe 6 bzw. 9 in die Fassung 4 müssen die drei Rippen 8 soweit komprimiert werden, daß bei den auftretenden dynamischen Belastungen, für die die Fassung ausgelegt ist, ein Abheben der Linse 1 von der Ringkante vermieden wird. Der in Fig. 2 gezeigte Vorschraubring 6 wird auf Anschlag festgedreht und danach um ca. 1/4 Umdrehung zurückgesetzt. Der Klebesteckring 9 wird beispielsweise mit dem 100-fachen Linsengewicht gleichmäßig belastet und in die Fassung eingeklebt.

Mit diesen Halteringen werden auch in axialer Richtung Druckspannungen infolge von Temperaturvariationen weitgehend unterbunden.

Die Erfindung ist vorstehend anhand von Ausführungsbeispielen ohne Beschränkung der Allgemeinheit beschrieben worden. Innerhalb des erfindungsgemäßen Grundgedankens sind die verschiedensten Variationen möglich. Insbesondere ist es möglich, die vorgesehenen Spaltweiten, sowie das Höhen/Breitenverhältnis der elastischen Rippen entsprechend speziellen Erfordernissen zu ändern. Darüberhinaus kann auch die Winkelerstreckung sowie die Zahl der verwendeten Rippen den jeweiligen Erfordernissen angepaßt werden.

**Patentansprüche**

1. Optisches System mit einer Fassung und mindestens einem in der Fassung (4) gehaltenen optischen Element (1) mit einem zylindrischen Umfangsrand (2), auf dem mindestens drei in Umfangsrichtung im Abstand voneinander angeordnete Rippen ($3_1, 3_2, 3_3$) aus elastischem Material angeordnet sind, die bei Einbau in die Fassung (4) komprimiert werden, dadurch **gekennzeichnet**, daß die Höhe der Rippen ($3_1, 3_2, 3_3$) so gewählt ist, daß die Rippen bei Normbedingungen für Umgebungsbedingungen und Passung um 50% komprimiert sind, und die Höhenänderung der Rippen durch Passungstoleranzen und Temperaturänderungen ca. +33% beträgt, und daß das elastische Material ein Silikonkautschuk ist.

2. Optisches System nach Anspruch 1, dadurch **gekennzeichnet**, daß drei Rippen ($3_1, 3_2, 3_3$) vorgesehen sind, die eine Winkelerstreckung von jeweils ca. 60° und einen Winkelabstand von jeweils ca. 120° haben.

3. Optisches System nach Anspruch 1 oder 2, **gekennzeichnet** durch die folgende Werte:

| Nennmaß N mm | Linsendurchmesser mm | Fassungsdurchmesser mm | nom. Spaltweite mm | Rippenhöhe mm |
|---|---|---|---|---|
| ... 18 | $(N-0,08)_{h7}$ | $N^{H6}$ | 0,040 | 0,08 |
| 18... 30 | $(N-0,12)_{h7}$ | $N^{H6}$ | 0,060 | 0,12 |
| 30... 50 | $(N-0,20)_{h7}$ | $N^{H6}$ | 0,100 | 0,20 |
| 50... 80 | $(N-0,30)_{h7}$ | $N^{H6}$ | 0,150 | 0,30 |
| 80...120 | $(N-0,45)_{h7}$ | $N^{H6}$ | 0,225 | 0,45 |

4. Optisches System nach einem der Ansprüche 1 bis 3, dadurch **gekennzeichnet**, daß ein Vorschraubring (6) vorgesehen ist, der ebenfalls hochelastische Rippen (8) aufweist, die an einer optischen Fläche ($r_2$) des optischen Elements (1) anliegen.

5. Optisches System nach einem der Ansprüche 1 bis 3, dadurch **gekennzeichnet**, daß ein eingeklebter Steckring (9) vorgesehen ist, der ebenfalls hochelastische Rippen (8) aufweist, die an einer optischen Fläche ($r_2$) des optischen Elements (1) anliegen.

## Claims

1. Optical system with one mount and, held in the mount (4), at least one optical element (1) with a cylindrical circumference rim (2) on which at least three ribs ($3_1$, $3_2$, $3_3$) of elastic material have been positioned at a distance to one another in the direction of the circumference and where said ribs are compressed on assembly into the mount (4),
characterized by the fact that the height of the ribs ($3_1$, $3_2$, $3_3$) has been selected in such a way that at standard conditions for environmental conditions and fitting the ribs are compressed by 50%, and that the height change of the ribs due to fitting tolerances and temperature changes is approximately +33%, and that the elastic material is a silicon rubber.

2. Optical system according to claim 1, characterized by the fact that three ribs ($3_1$, $3_2$, $3_3$) are provided which have an angle extent in each case of approximately 60° and an angle distance in each case of approximately 120 °.

3. Optical system according to claims 1 or 2, characterized by the following values:

| Nominal Measurement N mm | Lens Element Diameter mm | Mount Diameter mm | Nominal Gap Width mm | Rib Height mm |
|---|---|---|---|---|
| ... 18 | $(N-0.08)_{h7}$ | $N^{H6}$ | 0.040 | 0.08 |
| 18... 30 | $(N-0.12)_{h7}$ | $N^{H6}$ | 0.060 | 0.12 |
| 30... 50 | $(N-0.20)_{h7}$ | $N^{H6}$ | 0.100 | 0.20 |
| 50... 80 | $(N-0.30)_{h7}$ | $N^{H6}$ | 0.150 | 0.30 |
| 80...120 | $(N-0.45)_{h7}$ | $N^{H6}$ | 0.225 | 0.45 |

4. Optical system according to any of the claims 1 to 3, characterized by the fact that a locking ring (6) is provided which also possesses highly elastic ribs (8) which abut an optical surface ($r_2$) of the optical element (1).

5. Optical system according to any of the claims 1 to 3, characterized by the fact that a glued slide ring (9) is provided which also possesses highly elastic (8) which abut an optical surface ($r_2$) of the optical element (1).

**Revendications**

1. Système optique avec une monture et au moins un élément optique (1) tenu dans la monture (4) avec un bord de circonférence cylindrique (2), sur lequel se trouvent au moins trois ailettes d'un matérial élastique positionnées en direction de corconférence avec, à distances égales, qui seront comprimées lors de l'installation dans la monture,
caractérisé en ce que la hauteur des ailettes ($3_1$, $3_2$, $3_3$) est choisie de facon que les ailettes sous conditions normales soient comprimées de 50% pour les conditions d'alentours et d'ajustage, et que le changement de hauteur des ailettes par tolérances d'ajustage et variations de température soit approximativement + 33%, et que le matérial élastique soit un caoutchouc de silicone.

2. Système optique selon la revendication 1, caractérisé en ce que trois ailettes ($3_1$, $3_2$, $3_3$) sont prévues dont chacune possède un étirage angulaire d'approximativement 60° et une distance angulaire d'approximativement 120°.

3. Système optique selon l'une des revendications 1 et 2, caractérisé par les valeurs suivantes:

| mesure nominale mm | diamètre de la lentille mm | diamètre de la monture mm | largeur de fente normale mm | hauteur d'ailette mm |
|---|---|---|---|---|
| ... 18 | $(N-0,08)_{h7}$ | $N^{H6}$ | 0,040 | 0,08 |
| 18... 30 | $(N-0,12)_{h7}$ | $N^{H6}$ | 0,060 | 0,12 |
| 30... 50 | $(N-0,20)_{h7}$ | $N^{H6}$ | 0,100 | 0,20 |
| 50... 80 | $(N-0,30)_{h7}$ | $N^{H6}$ | 0,150 | 0,30 |
| 80...120 | $(N-0,45)_{h7}$ | $N^{H6}$ | 0,225 | 0,45 |

4. Système optique selon l'une des revendications 1 et 2, caractérisé en ce qu'un anneau de serrure (6) est prévue qui également possède des ailettes extrèmement élastiques (8) adjacents à une surface optique ($r_2$) de l'élément optique (1).

5. Système optique selon l'une des revendications 1 à 3, caractérisé en ce qu'un anneau c'accouplement collé (9) est prévu qui également possède des ailettes extrèmement élastiques (8) adjacents à une surface optique ($r_2$) de l'élément optique (1).

FIG. 1

7

6

$r_2$

5

3

2

$\theta$

$\underline{1}$

4

Fig. 2

10

9

$r_2$

5

2

$\theta$

3

$\underline{1}$

a

5

4

FIG. 3